# EUROPÄISCHE PATENTANMELDUNG

(11) **EP 4 254 976 A1**
(43) Veröffentlichungstag der Anmeldung: **04.10.2023**
(21) Anmeldenummer: 23161657.4
(22) Anmeldetag: 14.03.2023
(51) Int. Cl.: H04N 23/72, H04N 23/73, H04N 23/74, H04N 23/75, H04N 23/76

(54) **VERFAHREN ZUM AUFNEHMEN EINER FOLGE VON BILDERN**

(30) Priorität: 01.04.2022 DE 102022107815
(71) Anmelder: Arnold & Richter Cine Technik GmbH & Co. Betriebs KG, 80807 München (DE)
(72) Erfinder: HAUBMANN, Michael, 1230 Wien (AT)
(74) Vertreter: Manitz Finsterwald Patent- und Rechtsanwaltspartnerschaft mbB

(57) **Zusammenfassung**

Bei einem Verfahren zum Aufnehmen einer Folge von Bildern mittels einer digitalen Laufbildkamera erzeugt ein Bildsensor elektrische Signale in Abhängigkeit von einer Belichtung. Es sind wenigstens zwei Belichtungsänderungsvorrichtungen vorgesehen, welche zum Beeinflussen der Belichtung des Bildsensors durch ein Einstellen eines jeweiligen Betriebsparameters eingerichtet sind. Eine der Belichtungsänderungsvorrichtungen ist als eine Variationsvorrichtung und eine weitere Belichtungsänderungsvorrichtung ist als eine Kompensationsvorrichtung vorgesehen oder auswählbar. Während eines Aufnehmens einer Folge von Bildern werden die folgenden Schritte durchgeführt: Beeinflussen der Belichtung des Bildsensors durch ein Ändern des Einstellwerts des Betriebsparameters der Variationsvorrichtung; Empfangen des geänderten Einstellwerts; Ermitteln eines jeweiligen Verstellwerts des Betriebsparameters der Kompensationsvorrichtung und Ausgeben des jeweiligen Verstellwerts an die Kompensationsvorrichtung, wobei eine durch ein Ändern des Einstellwerts verursachte Beeinflussung der Belichtung des Bildsensors durch eine Änderung des jeweiligen Verstellwerts zumindest im Wesentlichen kompensiert wird; und Betreiben der zumindest einen Kompensationsvorrichtung gemäß dem ausgegebenen jeweiligen Verstellwert.

## Beschreibung

Die vorliegende Erfindung betrifft ein Verfahren zum Aufnehmen einer Folge von Bildern mittels einer digitalen Laufbildkamera, die einen Bildsensor zum Erzeugen von elektrischen Signalen in Abhängigkeit von einer Belichtung des Bildsensors umfasst.

Bekannte digitale Laufbildkameras verwenden typischerweise einen Bildsensor in CMOS- oder CCD-Technologie, der eine Vielzahl von lichtempfindlichen Elementen, sogenannten Pixeln, umfasst. Üblicherweise sind die Pixel in Zeilen und Spalten als zweidimensionale Matrix angeordnet. Die Pixel wandeln das Licht, welches durch ein an die Laufbildkamera angeschlossenes Objektiv fällt, in elektrische Signale um. Bei den Signalen kann es sich beispielsweise um elektrische Ladungen, Ströme oder Spannungen handeln. Ein jeweiliges Signal repräsentiert dabei eine in Abhängigkeit von der Belichtung gesammelte Ladung des jeweiligen Pixels. Die Belichtung kann in diesem Zusammenhang insbesondere durch die Intensität, Dauer und/oder Wellenlänge der Lichtbeaufschlagung beeinflusst werden.

Innerhalb der Pixel und/oder in einer separaten Ausleseschaltung, die üblicherweise am Rand des durch die Pixel gebildeten Bildfelds des Bildsensors angeordnet ist, werden die Signale der Pixel in der Regel in elektrische Spannungen konvertiert. Außerdem können die Signale von einer Verstärkereinrichtung gemäß einem festen oder einstellbaren Verstärkungsfaktor zu verstärkten Bildsignalen verstärkt werden. Die Bildsignale können innerhalb der Laufbildkamera mit einem oder mehreren Analog-Digital-Wandlern digitalisiert werden. Auf digitaler Ebene kann ein Skalieren der Bildsignale erfolgen (sogenanntes Mapping). Die digitalen Bildsignale können in einer internen Speichereinrichtung der Laufbildkamera aufgezeichnet und/oder an einem oder mehreren Ausgängen der Laufbildkamera ausgegeben werden.

Mittels der digitalen Laufbildkamera wird eine Folge von aufeinanderfolgenden Bildern, d.h. eine Filmszene, aufgenommen, wobei die Bildsignale einem jeweiligen Bild entsprechen. Mithin ist die Helligkeit eines jeweiligen Bildes einerseits abhängig von dem genannten Verstärkungsfaktor, um den die vom Bildsensor erzeugten Signale verstärkt werden, und andererseits von der Belichtung, also der Menge des auf den Bildsensor auftreffenden Lichts. Diese Lichtmenge wird bei gegebenen Lichtverhältnissen der aufgenommenen Filmszene im Wesentlichen durch die Belichtungszeit sowie durch die Blende eines an die Filmkamera angeschlossenen Objektivs bestimmt, wobei auch die Transmission der Optik (Transmission plus Blendenapertur ergibt die sogenannte T-Zahl) und eventuell vorhandene Filter (z.B. Neutraldichtefilter) die Belichtung und somit die Helligkeit des Bildes beeinflussen. Eine Blende eines Objektivs (z.B. Irisblende) definiert einen einstellbaren Öffnungsquerschnitt, der als Blendenapertur bezeichnet wird und den Querschnitt des durch das Objektiv in die Laufbildkamera eindringenden Lichtstrahlbündels begrenzt. Somit ist die Menge des auf den Bildsensor auftreffenden Lichts von der Größe der eingestellten Blendenapertur abhängig. Es ist üblich, die Blendenapertur mittels einheitlich definierter Blendenzahlen anzugeben (auch als "f-number" oder "f-stop" bezeichnet), z.B. 1/2,8. Unabhängig von dieser Konvention wird der Wert der eingestellten oder einzustellenden Blendenapertur auch als Blendenwert bezeichnet.

Die eingestellte Blendenapertur hat nicht nur einen Einfluss auf die auf den Bildsensor auftreffende Lichtmenge (Belichtung), sondern auch auf den als Schärfentiefe (oft auch als Tiefenschärfe) bezeichneten Abstandsbereich, in dem das Motiv oder die Filmszene scharf auf den Bildsensor abgebildet wird. Eine Änderung der Blendenapertur kann daher auch zur Bildgestaltung erfolgen, beispielsweise um gezielt Tiefenunschärfeeffekte herbeizuführen, durch die bestimmte Abstandsbereiche (z.B. Schauspieler) in der Filmszene gegenüber anderen Bereichen (Vorder-/Hintergrund) herausgestellt werden können. Eine derartige Änderung der Blendenapertur zur ausschließlichen Änderung der Schärfentiefe soll jedoch nicht zu einer wahrnehmbaren Veränderung der Helligkeit in der Folge der aufgezeichneten Bilder oder eines sonstigen wahrnehmbaren Bildparameters führen.

Eine weitere Methode zur Bildgestaltung besteht darin, die Belichtungszeit während der Aufnahme der Laufbildfolge zu variieren. Hierbei können harmonische Bewegungen in der Filmszene in eine Art Stroboskopeffekt umgewandelt werden und umgekehrt. Als Stroboskopeffekt ist in diesem Zusammenhang das Verhältnis von Integrationszeit zu Nicht-Integrationszeit des Bildsensors zu verstehen. Die Variation der Belichtungszeit kann beispielsweise durch Einstellen der Belichtungszeit eines elektronischen Verschlusses des Bildsensors erfolgen. Hierfür kann die Integrationszeit des Bildsensors, d.h. die Zeitdauer, die zwischen einem Löschen oder Rücksetzen des Bildsensors und dem Beginn des Auslesens des Bildsensors vergeht, eingestellt werden. Alternativ oder zusätzlich kann auch die Verschlusszeit eines mechanischen Verschlusses variiert werden. Als mechanische Verschlüsse kommen bei Laufbildkameras häufig rotierende Sektorblenden zum Einsatz, wobei zur Einstellung der Belichtungszeit der Sektorwinkel, d.h. der offene Winkelbereich der Sektorblende, verändert werden kann.

Eine weitere zur Bildgestaltung eingesetzte Methode besteht darin, die Bildwiederholrate, mit welcher die Folge von Bildern aufgenommen wird, während einer laufenden Aufnahmesequenz zu variieren. Dadurch können Übergänge zwischen einer Aufnahme in Echtzeit, Zeitraffer und/oder Zeitlupe verwirklicht werden. Eine Veränderung der Bildwiederholrate beeinflusst auch die Zeitdauer, die pro Bild für die Integration zur Verfügung steht, was ebenfalls zu Variationen in der Belichtung des Bildsensors führt.

Aus DE 10 2013 209 164 A1 ist es bekannt, eine Veränderung der Belichtung des Bildsensors, die während der Aufnahme der Folge von Bildern durch ein Verstellen der Blendenapertur verursacht wird, durch eine angepasste elektrische Verstärkung der Signale des Bildsensors zu kompensieren. Hierbei besteht jedoch ein Nachteil darin, dass eine Erhöhung des Verstärkungsfaktors der Verstärkerschaltung auch das Bildrauschen des eingesetzten Bildsensors verstärken kann. Hierdurch kann die Qualität der erzeugten Bilder beeinträchtigt werden.

Ein weiteres Problem bei einer derartigen Belichtungskompensation besteht darin, dass die auftretenden Effekte Nicht-Linearitäten aufweisen können, so dass eine deterministische Korrektur bisweilen nur unzureichende Resultate liefert.

Es ist eine Aufgabe der Erfindung, ein Verfahren zum Aufnehmen einer Folge von Bildern mittels einer digitalen Laufbildkamera bereitzustellen, durch welches die Möglichkeiten der Bildgestaltung durch Beeinflussen von Betriebsparametern der Laufbildkamera während einer laufenden Aufnahme ohne eine unerwünschte Beeinträchtigung der Bildqualität verbessert werden. Eine Aufgabe der Erfindung besteht auch darin, ein Kalibrierverfahren für eine Belichtungskompensation anzugeben, welches durch eine empirische Herangehensweise auch Nicht-Linearitäten in den Zusammenhängen zwischen den verschiedenen Betriebsparametern berücksichtigt.

Die Aufgabe wird durch ein Verfahren mit den Merkmalen des Anspruchs 1 gelöst.

Die vorliegende Erfindung sieht ein Verfahren zum Aufnehmen einer Folge von Bildern mittels einer digitalen Laufbildkamera vor, die einen Bildsensor zum Erzeugen von elektrischen Signalen in Abhängigkeit von einer Belichtung des Bildsensors umfasst. Es sind wenigstens zwei Belichtungsänderungsvorrichtungen vorgesehen, welche jeweils zum Beeinflussen der Belichtung des Bildsensors durch ein Einstellen eines zugeordneten Betriebsparameters eingerichtet sind. Bei dem der jeweiligen Belichtungsänderungsvorrichtung zugeordneten Betriebsparameter kann es sich beispielsweise um eine Belichtungszeit, einen Blendenwert oder eine Bildwiederholrate handeln, wie nachstehend noch erläutert wird. Die Belichtungsänderungsvorrichtungen sind aus einer Gruppe von Belichtungsänderungsvorrichtungen ausgewählt, die zumindest eine Bildwiederholraten-Einstellvorrichtung, eine Blendenapertur-Einstellvorrichtung, einen elektronischen Verschluss des Bildsensors, einen mechanischen Verschluss, einen einstellbaren Neutraldichtefilter und zumindest eine steuerbare Beleuchtungseinrichtung zur Beleuchtung eines von der Laufbildkamera erfassbaren Motivs umfasst.

Eine der Belichtungsänderungsvorrichtungen ist als eine Variationsvorrichtung vorgesehen oder auswählbar, und zumindest eine weitere, von der Variationsvorrichtung verschiedene Belichtungsänderungsvorrichtung ist als zumindest eine Kompensationsvorrichtung vorgesehen oder auswählbar. Es können eine einzige oder mehrere Kompensationsvorrichtungen (insbesondere gleichartige oder verschiedenartige Kompensationsvorrichtungen) vorgesehen sein. Es ist zumindest eine Steuereinrichtung vorgesehen, welche zum direkten oder indirekten Empfangen eines Einstellwerts des Betriebsparameters der Variationsvorrichtung und zum Ausgeben eines jeweiligen Verstellwerts an die zumindest eine Kompensationsvorrichtung eingerichtet ist.

Das Verfahren umfasst die folgenden Schritte, die in einem Variationsbetrieb während eines Aufnehmens einer Folge von Bildern durchgeführt werden:
- Beeinflussen der Belichtung des Bildsensors durch ein Ändern des Einstellwerts des der Variationsvorrichtung zugeordneten Betriebsparameters;
- Empfangen des geänderten Einstellwerts (beispielsweise ein direktes oder indirektes Übermitteln an die Steuereinrichtung);
- Ermitteln eines jeweiligen Verstellwerts des Betriebsparameters der Kompensationsvorrichtung (oder Kompensationsvorrichtungen) und Ausgeben des jeweiligen Verstellwerts von der Steuereinrichtung an die Kompensationsvorrichtung(en) in Abhängigkeit von dem empfangenen geänderten Einstellwert des Betriebsparameters der Variationsvorrichtung, wobei der jeweilige Verstellwert derart gewählt wird, dass eine durch das Ändern des Einstellwerts verursachte Beeinflussung der Belichtung des Bildsensors durch eine Änderung des jeweiligen Verstellwerts zumindest im Wesentlichen kompensiert wird; und
- Betreiben der Kompensationsvorrichtung oder Kompensationsvorrichtungen gemäß dem ausgegebenen jeweiligen Verstellwert.

Die Belichtung des Bildsensors erfolgt aufgrund einer Abbildung des Objektraums mit einem dort befindlichen Motiv auf den Bildsensor. Die Abbildung erfolgt in der Regel mit Hilfe eines an der Laufbildkamera angeordneten Objektivs. Bei den genannten Belichtungsänderungsvorrichtungen handelt es sich insbesondere um Vorrichtungen zum Variieren von Aufnahmeparametern, welche direkt oder indirekt die Helligkeit eines von dem Bildsensor erzeugten Bildes bzw. einer Bildsequenz beeinflussen. Die Belichtungsänderungsvorrichtungen können Bestandteil der Laufbildkamera oder auch externe Vorrichtungen sein, welche mechanisch und/oder kommunikativ mit der Laufbildkamera und/oder der Steuereinrichtung gekoppelt oder koppelbar sind.

Von den wenigstens zwei Belichtungsänderungsvorrichtungen fungiert eine als Variationsvorrichtung, wobei durch ein Einstellen des Betriebsparameters dieser Variationsvorrichtung ein gewünschter gestalterischer Effekt erreicht werden kann. Das Einstellen des der Variationsvorrichtung zugeordneten Betriebsparameters kann von einem Benutzer der Laufbildkamera (z.B. Kameramann, Kameraassistent) beispielsweise manuell, elektrisch oder elektromechanisch vorgenommen werden, insbesondere über eine Bedieneinheit (z.B. mit Taste, Schieberegler, Wippe, Drehrad), wobei eine solche Bedieneinheit auch als eine Fernsteuereinheit ausgebildet sein kann. Bei der Variationsvorrichtung kann es sich beispielsweise um eine Blendenapertur-Einstellvorrichtung handeln, bei welcher als Betriebsparameter der Blendenwert variiert werden kann. Diejenige Belichtungsänderungsvorrichtung, die als Variationsvorrichtung fungieren soll, ist entweder fest vorgegeben oder kann durch den Benutzer ausgewählt werden, wobei nicht notwendigerweise alle zur Verfügung stehenden Belichtungsänderungsvorrichtungen auch als Variationsvorrichtung auswählbar sein müssen.

Für eine jeweils vorgegebene oder ausgewählte Variationsvorrichtung können eine oder auch mehrere der Belichtungsänderungsvorrichtungen als jeweilige Kompensationsvorrichtung vorgegeben oder auswählbar sein. Für das vorstehend genannte Beispiel, bei dem die Blendenapertur-Einstellvorrichtung als Variationsvorrichtung vorgesehen ist, kann beispielsweise zumindest der elektronische Verschluss des Bildsensors als Kompensationsvorrichtung vorgegeben oder ausgewählt sein. Zusätzlich können eine oder mehrere weitere Belichtungsänderungsvorrichtungen, wie ein einstellbarer Neutraldichtefilter und/oder eine externe Beleuchtung hinzugewählt werden.

Wenn beispielsweise zu gestalterischen Zwecken mittels der genannten Blendenapertur-Einstellvorrichtung die Blendenapertur verkleinert wird, führt dies ohne eine Kompensation zu einer Verringerung der Belichtung des Bildsensors. Diese Verringerung der Bildhelligkeit kann im Beispiel unmittelbar durch ein Erhöhen der Belichtungszeit des elektronischen Verschlusses des Bildsensors kompensiert werden, so dass sich die effektive Belichtung des Bildsensors zumindest hinsichtlich dieser Ursache (Betätigung der Variationsvorrichtung) nicht ändert. Es versteht sich jedoch, dass weitere, die Bildhelligkeit beeinflussende Effekte, die sich beispielsweise aus einer Bewegung innerhalb des Motivs ergeben, durch das erfindungsgemäße Verfahren nicht kompensiert werden. Auch Effekte, die sich beispielsweise durch ein Verändern der Beleuchtungshelligkeit der Filmszene ergeben (beispielsweise die Simulation eines Sonnenaufgangs oder das Einschalten einer Beleuchtung), werden im Rahmen des erfindungsgemäßen Verfahrens nicht kompensiert.

Bei der Kompensation der Beeinflussung der Belichtung wird jedoch die elektrische Verstärkung der Bildsignale im Bildsensor grundsätzlich konstant gehalten, d.h. ein gegebenenfalls änderbarer Verstärkungsfaktor einer elektrischen Verstärkerschaltung wird zumindest im Rahmen der erfindungsgemäßen Kompensation nicht oder nicht notwendigerweise geändert.

Das Ändern des Einstellwerts des Betriebsparameters der Variationsvorrichtung kann in diskreten Schritten oder auch kontinuierlich erfolgen, wobei das Ändern manuell durch einen Benutzer oder auch automatisiert auf der Grundlage eines vorgegebenen Verlaufs, beispielsweise einer Rampenfunktion, durchgeführt werden kann.

Bei der Steuereinrichtung, die zur Durchführung des Verfahrens eingerichtet ist, kann es sich um eine in die Laufbildkamera integrierte Steuereinrichtung, welche beispielsweise als ein Teil einer Steuereinrichtung der Laufbildkamera ausgebildet sein kann, oder auch um eine dezidierte Untereinheit der Laufbildkamera handeln. Alternativ kann auch eine externe Steuereinrichtung vorgesehen sein, welche mit der Laufbildkamera und den Belichtungsänderungsvorrichtungen gekoppelt oder koppelbar ist. Die Steuereinrichtung kann beispielsweise eine oder mehrere der folgenden Einrichtungen umfassen: einen integrierten Schaltkreis (IC), einen Mikroprozessor, eine zentrale Recheneinheit (CPU), eine anwendungsspezifische integrierte Schaltung (ASIC) oder ein Field Programmable Gate Array (FPGA).

Das Empfangen des Einstellwerts des Betriebsparameters der Variationsvorrichtung setzt nicht notwendigerweise das Vorhandensein einer Sensorvorrichtung an der Variationsvorrichtung zur Erzeugung und/oder Übermittlung des Einstellwerts voraus, um etwa einen Istwert zu ermitteln. Der Einstellwert kann auch intern übermittelt werden, beispielsweise wenn das Verfahren innerhalb einer Steuereinrichtung der Laufbildkamera durchgeführt wird. Insbesondere kann auch der Einstellwert in Form eines Sollwerts bereitgestellt werden, der zum Beispiel bei einer automatisierten Variation auf der Grundlage eines vorgegebenen Verlaufs sowohl an die Variationsvorrichtung als auch an die Steuereinrichtung ausgegeben wird.

Das Ändern des Verstellwerts der zumindest einen Kompensationsvorrichtung und das Übermitteln des geänderten Verstellwerts an die zumindest eine Kompensationsvorrichtung erfolgt in der Regel in einer Weise, dass ausgehend von einem bisherigen Absolutwert des Verstellwerts, also einem aktuell eingestellten Wert des Betriebsparameters der Kompensationsvorrichtung, ein neuer die Beeinflussung der Belichtung kompensierender Absolutwert dieses Betriebsparameters ausgegeben wird. Die Kompensationsvorrichtung oder die Kompensationsvorrichtungen wird/werden somit auf Basis des übermittelten geänderten Verstellwerts betrieben.

Die Bildwiederholraten-Einstellvorrichtung kann beispielsweise eine Steuerschaltung umfassen (insbesondere einen integrierten Schaltkreis, einen Mikroprozessor, eine anwendungsspezifische integrierte Schaltung oder ein Field Programmable Gate Array), welche die Periodendauer von aufeinanderfolgenden Auslesezyklen des Bildsensors und/oder die Rotationsfrequenz einer im Strahlengang befindlichen rotierenden Sektorblende steuert. Diese Steuerschaltung kann auch integraler Teil der genannte Steuereinrichtung sein, welche den jeweiligen Verstellwert des Betriebsparameters der Kompensationsvorrichtung ermittelt und ausgibt. Die Blendenapertur-Einstellvorrichtung kann beispielsweise eine Irisblende umfassen, deren Öffnungsquerschnitt (insbesondere die Stellung von beweglichen Lamellen) elektromechanisch einstellbar ist. Der elektronische Verschluss des Bildsensors kann beispielsweise eine Steuerschaltung umfassen (insbesondere einen integrierten Schaltkreis, einen Mikroprozessor, eine anwendungsspezifische integrierte Schaltung oder ein Field Programmable Gate Array), welche die Zeitdauer steuert, die zwischen dem Beginn und dem Ende der fotoelektrischen Erzeugung von Ladung in den Pixeln des Bildsensors vergeht. Diese Steuerschaltung kann auch integraler Teil der genannte Steuereinrichtung sein, welche den jeweiligen Verstellwert des Betriebsparameters der Kompensationsvorrichtung ermittelt und ausgibt. Der mechanische Verschluss kann beispielsweise eine im Strahlengang der Laufbildkamera befindliche rotierende Sektorblende umfassen, deren offener Winkelbereich elektromechanisch einstellbar ist. Der einstellbare Neutraldichtefilter kann beispielsweise ein elektromechanisch steuerbares Filterrad, eine in diskreten Abstufungen elektromechanisch steuerbare Anordnung von hintereinander im Strahlengang positionierbaren Filterelementen oder eine diskret oder kontinuierlich elektrisch steuerbares LCD-Filter umfassen.

Die jeweilige steuerbare Beleuchtungseinrichtung kann beispielsweise einen Scheinwerfer oder ein Lichtpaneel umfassen (insbesondere mit LED-Lichtquellen). Insbesondere können auch Beleuchtungssysteme mit mehreren Lichtquellen vorgesehen sein. Derartige Beleuchtungssysteme mit mehreren Lichtquellen können insbesondere auch eine sogenannte Videowand (auch als Videowall bezeichnet) umfassen. Eine oder mehrere derartige Videowände können Bestandteil eines sogenannten Virtual Production Volume sein. Derartige Systeme werden eingesetzt, um statische oder auch animierte Hintergründe oder Vordergründe in der aufzunehmenden Filmszene darzustellen. In der Regel handelt es sich hierbei um großflächige Bildschirme mit einer Vielzahl von aktiven Bildelementen, die in ihrer Farbe und/oder Helligkeit gesteuert werden können.

Gemäß einer Ausführungsform des Verfahrens ist als Variationsvorrichtung ein mechanischer oder elektronischer Verschluss des Bildsensors vorgesehen oder auswählbar, dessen Betriebsparameter eine Belichtungszeit ist.

Gemäß einer weiteren Ausführungsform ist als Variationsvorrichtung eine Blendenapertur-Einstellvorrichtung vorgesehen oder auswählbar, deren Betriebsparameter ein Blendenwert ist.

Gemäß einer weiteren Ausführungsform ist als Variationsvorrichtung eine Bildwiederholraten-Einstellvorrichtung vorgesehen oder auswählbar, deren Betriebsparameter eine Bildwiederholrate des Bildsensors ist.

Bei einigen Ausführungsformen kann entweder nur eine der genannten Variationsvorrichtungen fest vorgegeben sein, oder es kann zwischen mehreren der genannten Variationsvorrichtungen ausgewählt werden. Falls eine Bildwiederholraten-Einstellvorrichtung als Variationsvorrichtung vorgesehen ist, wird durch eine Anpassung der Kompensationsvorrichtung an eine geänderte Bildwiederholrate der Tatsache Rechnung getragen, dass die Belichtungszeit zwangsläufig nicht länger sein kann als die durch die Bildwiederholrate vorgegebene Periodendauer für die Aufnahme eines einzelnen Bildes der Bildsequenz. Bei einer Erhöhung der Bildwiederholrate muss gegebenenfalls die Belichtungszeit verkürzt werden, während bei einer Verringerung der Bildwiederholrate aufgrund der dann längeren Periodendauer eine Erhöhung der Belichtungszeit vorgesehen sein kann.

Bei einigen Ausführungsformen des Verfahrens wird der jeweilige Verstellwert des Betriebsparameters der zumindest einen Kompensationsvorrichtung in Abhängigkeit von dem geänderten Einstellwert des Betriebsparameters der Variationsvorrichtung anhand einer vorbestimmten Beziehung zwischen verschiedenen Einstellwerten des Betriebsparameters der Variationsvorrichtung und zugeordneten Verstellwerten ermittelt. Die genannte vorbestimmte Beziehung kann insbesondere ein Maß für eine Änderung des Verstellwerts für den Betriebsparameter der Kompensationsvorrichtung definieren, welches erforderlich ist, um ein bestimmtes Maß einer Änderung des Einstellwerts des Betriebsparameters der Variationsvorrichtung zu kompensieren. Es versteht sich, dass nicht nur eine vorbestimmte Beziehung existieren kann, sondern dass in Abhängigkeit von der Anzahl der vorhandenen Belichtungsänderungsvorrichtungen, die wahlweise als Variationsvorrichtung oder Kompensationsvorrichtung betrieben werden können, jeweils entsprechende jeweilige vorbestimmte Beziehungen ermittelt werden können.

In diesem Zusammenhang ist es von Vorteil, wenn in einem Kalibrierbetrieb, der vor dem Variationsbetrieb durchgeführt wird, die vorbestimmte Beziehung zwischen den verschiedenen Einstellwerten des Betriebsparameters der Variationsvorrichtung und den zugeordneten Verstellwerten ermittelt und in einer mit der Steuereinrichtung verbundenen oder verbindbaren Speichereinrichtung gespeichert wird. Die genannte vorbestimmte Beziehung kann beispielsweise in Form einer Zuordnungstabelle, einer numerischen oder algebraischen Zuordnungsfunktion oder eines sonstigen, auch komplexen Algorithmus ermittelt und gespeichert werden. Insbesondere kann die vorbestimmte Beziehung einen Regelkreis, beispielsweise einen geschlossenen Regelkreis ("Closed Loop"), definieren. Die zur Speicherung der vorbestimmten Beziehung vorgesehene Speichereinrichtung kann insbesondere einen nichtflüchtigen Festkörperspeicher umfassen (z.B. Flash-EEPROM). Die Speichereinrichtung kann der Steuereinrichtung oder der jeweiligen Belichtungsänderungsvorrichtung zugeordnet oder in diese integriert sein. Alternativ können auch externe Speichereinrichtungen wie externe Speichermedien, Apps für Mobilgeräte bzw. deren Speicher, oder auch Cloud-basierte Speichereinrichtungen vorgesehen sein.

Ein derartiger Kalibrierbetrieb ermöglicht eine empirische Ermittlung und Berücksichtigung von Nicht-Linearitäten in den Zusammenhängen zwischen den verschiedenen Betriebsparametern.

Gemäß einer Ausführungsform des Kalibrierbetriebs kann das Ermitteln der vorbestimmten Beziehung umfassen, dass bei konstanter Intensität des in die Laufbildkamera eintretenden Lichts die verschiedenen Einstellwerte des Betriebsparameters der Variationsvorrichtung nacheinander eingestellt werden und simultan dazu ein jeweiliger Helligkeitswert ermittelt wird, welcher die Belichtung des Bildsensors repräsentiert. Bei dieser Ausführungsform wird für jeden der verschiedenen Einstellwerte durch Verändern des Werts des Betriebsparameters der zumindest einen Kompensationsvorrichtung eine jeweilige Anpassung des Verstellwerts ermittelt, die bewirkt, dass der jeweilige Helligkeitswert zumindest im Wesentlichen einem Sollwert entspricht, der für die verschiedenen Einstellwerte des Betriebsparameters der Variationsvorrichtung identisch ist. Dieser Sollwert soll durch die jeweilige Anpassung des Verstellwerts insbesondere für jeden der verschiedenen Einstellwerte eingehalten werden. Der genannte Helligkeitswert kann beispielsweise durch die elektronischen Bildsignale des Bildsensors ermittelt werden, was nachfolgend noch näher erläutert wird. Das Ermitteln der jeweils erforderlichen Anpassung des Verstellwerts kann zum Beispiel mittels einer Regelschleife, insbesondere einer geschlossenen Regelschleife, erfolgen, welche die beispielsweise von dem Bildsensor ermittelte Helligkeit konstant hält. Der durch die jeweilige Anpassung ermittelte Verstellwert bildet somit den genannten zugeordneten Verstellwert des Betriebsparameters der zumindest einen Kompensationsvorrichtung für die vorbestimmte Beziehung zwischen den verschiedenen Einstellwerten des Betriebsparameters der Variationsvorrichtung und den zugeordneten Verstellwerten. Die genannte vorbestimmte Beziehung wird aus der Gesamtheit der Anpassungen ermittelt, wobei das Einstellen der verschiedenen Einstellwerte in diskreten Stufen oder auch kontinuierlich oder quasikontinuierlich erfolgen kann. Hierzu kann ein automatisierter Kalibrieralgorithmus vorgesehen sein, welcher die verschiedenen Einstellwerte des Betriebsparameters der Variationsvorrichtung einstellt und parallel hierzu die zur Kompensation erforderlichen Anpassungen des Verstellwerts der Kompensationsvorrichtung ermittelt. Es kann eine vorbestimmte Beziehung für einen bestimmten Sollwert des Helligkeitswerts ermittelt werden oder es können auch mehrere jeweilige vorbestimmte Beziehungen für unterschiedliche Sollwerte der Helligkeit ermittelt werden.

Gemäß einer alternativen Ausführungsform des Kalibrierbetriebs umfasst das Ermitteln der vorbestimmten Beziehung, dass bei konstanter Intensität des in die Laufbildkamera eintretenden Lichts die verschiedenen Einstellwerte des Betriebsparameters der Variationsvorrichtung nacheinander eingestellt werden und simultan dazu anhand von Bildsignalen des Bildsensors jeweilige zugehörige Helligkeitswerte ermittelt werden, welche die Belichtung des Bildsensors repräsentieren, wobei auf der Grundlage der verschiedenen Einstellwerte und der zugehörigen Helligkeitswerte eine Variationskennlinie ermittelt wird. Ferner wird rechnerisch oder experimentell zumindest eine Kompensationskennlinie ermittelt, welche für eine jeweilige Kompensationsvorrichtung einer gewünschten Änderung eines mittels des Bildsensors erfassten Helligkeitswerts eine hierfür notwendige Änderung des Verstellwerts dieser Kompensationsvorrichtung zuordnet, wobei in dem Variationsbetrieb der jeweilige Verstellwert des Betriebsparameters der zumindest einen Kompensationsvorrichtung anhand der Variationskennlinie und der zumindest einen Kompensationskennlinie ermittelt wird. Mit anderen Worten werden zur Ermittlung der Variationskennlinie im Kalibrierbetrieb für die verschiedenen Einstellwerte des Betriebsparameters der Variationsvorrichtung die zugehörigen Helligkeitswerte ohne ein Verändern der Verstellwerte der Kompensationsvorrichtung erfasst und gespeichert. Die zur Kompensation notwendigen Anpassungen werden unter Einbeziehung der Kompensationskennlinie rechnerisch ermittelt. Die genannten Kennlinien müssen nicht unbedingt ausschließlich einzelne Kennlinien sein, sondern können beispielsweise Kennlinienfunktionen oder Kennlinienfelder umfassen. Die genannten Kennlinien können beispielsweise als algebraisch oder numerisch definierte Zuordnungsfunktionen oder auch als Zuordnungstabellen ausgestaltet sein. Die genannten Kennlinien sind insbesondere Bestandteil einer jeweiligen vorbestimmten Beziehung. Es versteht sich, dass das Ermitteln einer jeweiligen Kennlinie insbesondere auch deren Speicherung in einer Speichereinrichtung umfassen kann.

Gemäß einer Ausführungsform kann ein experimentelles Ermitteln der Kompensationskennlinie umfassen, dass bei konstanter Intensität des in die Laufbildkamera eintretenden Lichts verschiedene Verstellwerte der Kompensationsvorrichtung nacheinander eingestellt werden und simultan dazu anhand von Bildsignalen des Bildsensors jeweilige zugehörige Helligkeitswerte ermittelt werden, welche die Belichtung des Bildsensors repräsentieren, wobei auf der Grundlage der verschiedenen Verstellwerte und der zugehörigen Helligkeitswerte die Kompensationskennlinie ermittelt wird. Das Ermitteln der Kompensationskennlinie erfolgt demnach in analoger Weise zu dem Ermitteln der Variationskennlinie im Kalibrierbetrieb.

Alternativ hierzu kann die Kompensationskennlinie auch auf einer rechnerischen Basis erfolgen, wenn für die betreffende Kompensationsvorrichtung der Zusammenhang zwischen einer Eingangsgröße und einer Ausgangsgröße vorab bekannt ist. Beispielsweise kann dieser Zusammenhang bei einer Beleuchtungsvorrichtung bekannt sein, wenn als Eingangsgröße der zur Lichterzeugung erforderliche elektrische Strom oder ein hiermit verknüpfter Parameter vorgesehen ist und als Ausgangsgröße ein von der Beleuchtungsvorrichtung erzeugter Lichtstrom gegeben ist. Zumindest innerhalb bestimmter Grenzen kann beispielsweise ein linearer oder sonstiger Zusammenhang zwischen dem elektrischen Strom und dem Lichtstrom angenommen werden. In einem derartigen Fall ist eine experimentelle Ermittlung der Kompensationskennlinie nicht unbedingt erforderlich.

Bei einigen Ausführungsformen können mehrere externe Beleuchtungseinrichtungen als jeweilige Kompensationsvorrichtung vorgesehen sein, wobei in dem Kalibrierbetrieb das Ermitteln der vorbestimmten Beziehung zwischen den verschiedenen Einstellwerten des Betriebsparameters der Variationsvorrichtung und den zugeordneten Verstellwerten der externen Beleuchtungseinrichtungen ein spezifisch für ein jeweiliges lichtempfindliches Element des Bildsensors oder für eine jeweilige Gruppe von benachbarten lichtempfindlichen Elementen durchgeführtes Ermitteln von spezifischen Beziehungen umfasst. Insbesondere können mehrere derartige Gruppen von zueinander benachbarten lichtempfindlichen Elementen vorgesehen sein, die mehreren verschiedenen Bildbereichen entsprechen. In dem nachfolgenden Variationsbetrieb erfolgt das Ausgeben eines jeweiligen Verstellwerts an die mehreren Kompensationsvorrichtungen auf der Grundlage dieser spezifischen Beziehung. Hierdurch wird berücksichtigt, dass eine einzelne Beleuchtungseinrichtung gegebenenfalls einzelne Teilbereiche eines aufzunehmenden Motivs unterschiedlich stark ausleuchtet und gegebenenfalls auch in unterschiedlicher Weise auf Änderungen des Verstellwerts ihres Betriebsparameters reagiert. Mit dieser Ausgestaltung kann eine an unterschiedliche Bereiche im Objektraum bzw. dessen Abbildung auf dem Bildsensor angepasste Kompensation erfolgen, so dass bei einer Änderung der Beleuchtungsintensität dieser Beleuchtungseinrichtung eine inhomogene Ausleuchtung der Filmszene bzw. des Bildsensors vermieden wird. Somit kann eine durch ein Ändern des Einstellwerts des Betriebsparameters der Variationsvorrichtung verursachte Beeinflussung der Belichtung des Bildsensors durch Ausgeben eines angepassten jeweiligen Verstellwerts an die zumindest eine Kompensationsvorrichtung zumindest im Wesentlichen homogen über die Fläche des Bildsensors kompensiert werden. Es erfolgt demnach eine bildbereichsabhängige Kompensation von Variationen der Belichtung, die durch ein Ändern des Einstellwerts der Variationsvorrichtung hervorgerufen werden.

Bei einigen Ausführungsformen kann in dem Kalibrierbetrieb das Ermitteln der spezifischen Beziehung separat für jede Beleuchtungseinrichtung oder für eine jeweilige Teilmenge der mehreren Beleuchtungseinrichtungen durchgeführt werden. Mit anderen Worten wird für jede Beleuchtungseinrichtung oder eine jeweilige Teilmenge der mehreren Beleuchtungseinrichtungen ein jeweiliger separater Kalibrierdurchgang durchgeführt, bei dem lediglich der Verstellwert von einer der Beleuchtungseinrichtungen bzw. der Teilmenge der mehreren Beleuchtungseinrichtungen verändert wird und die Verstellwerte der übrigen Beleuchtungseinrichtungen konstant gehalten werden oder die übrigen Beleuchtungseinrichtungen deaktiviert werden.

Gemäß einer weiteren Ausführungsform umfasst in dem Kalibrierbetrieb das Einstellen der verschiedenen Einstellwerte des Betriebsparameters der Variationsvorrichtung ein Vergrößern und ein Verringern des Einstellwerts, wobei für ein jeweiliges Vergrößern des Einstellwerts eine erste jeweilige Anpassung bzw. Variationskennlinie und für ein jeweiliges Verringern des Einstellwerts eine zweite jeweilige Anpassung bzw. Variationskennlinie ermittelt werden, wobei die vorbestimmte Beziehung die ersten und die zweiten Anpassungen bzw. die ersten und die zweiten Variationskennlinien umfasst. Diese Ausgestaltung dient insbesondere bei einer Verwendung von mechanisch wirkenden Belichtungsänderungsvorrichtungen, beispielsweise bei einer Blendenwert-Einstellvorrichtung, zur Kompensation einer mechanischen Hysterese, also eines Umkehrspiels.

Gemäß einer weiteren Ausführungsform wird in dem Kalibrierbetrieb der jeweilige Helligkeitswert durch Erfassen der durch den Bildsensor erzeugten elektrischen Signale ermittelt. Dies ermöglicht eine besonders präzise Ermittlung der vorbestimmten Beziehung, da hier der Einfluss von Änderungen des Einstellwerts bzw. der jeweiligen Verstellwerte auf die Bildhelligkeit in unmittelbarer, direkter Weise ermittelt werden kann. Alternativ kann der jeweilige Helligkeitswert auch mittels eines externen Helligkeitssensors ermittelt werden.

Bei einigen Ausführungsformen kann für das Ermitteln des jeweiligen Helligkeitswerts nur ein wählbarer Teilbereich, insbesondere ein zentraler Bereich des Bildsensors, berücksichtigt werden. Hierdurch können Effekte, die sich beim Variieren des Einstellwerts bzw. des zumindest einen Verstellwerts auf weniger wichtige Bildbereiche auswirken, unberücksichtigt bleiben. So können beispielsweise Vignettierungen, die aufgrund der optischen Eigenschaften des Objektivs beim Vergrößern der Blendenöffnung auftreten können, beim Ermitteln der vorbestimmten Beziehung unberücksichtigt bleiben.

Bei einigen Ausführungsformen wird in dem Kalibrierbetrieb ein Plausibilitätskontrollschritt durchgeführt, um ein fehlerhaftes Ermitteln der vorbestimmten Beziehung zu identifizieren, wobei bevorzugt der Plausibilitätskontrollschritt vorsieht, eine Beeinflussung der Belichtung des Bildsensors zu erkennen, welche nicht durch ein Ändern des Einstellwerts des Betriebsparameters der Variationsvorrichtung und/oder des Verstellwerts des Betriebsparameters der zumindest einen Kompensationsvorrichtung verursacht ist. Hierdurch können beispielsweise Schwankungen oder Ausfälle der Beleuchtung während des Kalibrierbetriebs erkannt werden, so dass das Ermitteln einer nicht korrekten vorbestimmten Beziehung vermieden werden kann.

Beispielsweise kann als Motiv im Objektraum der Laufbildkamera eine invariabel beleuchtete Fläche (z.B. Graukarte) angeordnet werden, die auf den Bildsensor abgebildet wird, wobei ein Ändern des Einstellwerts des Betriebsparameters der Variationsvorrichtung und ein Betreiben der zumindest einen Kompensationsvorrichtung mit dem jeweils zugeordneten Verstellwert gemäß der ermittelten vorbestimmten Beziehung erfolgen, und wobei anhand der von dem Bildsensor erzeugten elektrischen Signale geprüft wird, ob die Belichtung des Bildsensors unverändert bleibt, insbesondere für sämtliche lichtempfindlichen Elemente des Bildsensors.

Bei einigen Ausführungsformen wird in dem Variationsbetrieb ein Qualitätskontrollschritt durchgeführt, in welchem die von der Laufbildkamera erfasste Folge von Bildern darauf geprüft wird, ob zumindest ein wählbarer jeweiliger Teilbereich der Bilder während des Änderns des Einstellwerts des Betriebsparameters der Variationsvorrichtung einen zumindest im Wesentlichen konstanten Helligkeitswert aufweist.

In einem weiteren Aspekt bezieht sich die vorliegende Erfindung auf ein Filmproduktionssystem, welches zur Durchführung des erfindungsgemäßen Verfahrens und/oder zumindest einer seiner Ausführungsformen eingerichtet ist. Das Filmproduktionssystem umfasst: eine digitale Laufbildkamera, die einen Bildsensor zum Erzeugen von elektrischen Signalen in Abhängigkeit von einer Belichtung des Bildsensors umfasst; wenigstens zwei Belichtungsänderungsvorrichtungen, welche zum Beeinflussen der Belichtung des Bildsensors durch ein Einstellen eines jeweiligen Betriebsparameters eingerichtet sind und aus einer Gruppe von Belichtungsänderungsvorrichtungen ausgewählt sind, die zumindest eine Bildwiederholraten-Einstellvorrichtung, eine Blendenapertur-Einstellvorrichtung, einen elektronischen Verschluss des Bildsensors, einen mechanischen Verschluss, einen einstellbaren Neutraldichtefilter und zumindest eine steuerbare Beleuchtungseinrichtung zur Beleuchtung eines von der Laufbildkamera erfassten Motivs umfasst; und zumindest eine Steuereinrichtung, welche für die Durchführung des Verfahrens gemäß einer der erläuterten Ausführungsformen konfiguriert ist.

Weitere Ausführungsformen der Erfindung ergeben sich aus den Unteransprüchen, der Beschreibung und der Zeichnung.

Die Erfindung wird nachfolgend rein beispielhaft anhand eines Ausführungsbeispiels unter Bezugnahme auf die Zeichnung erläutert.

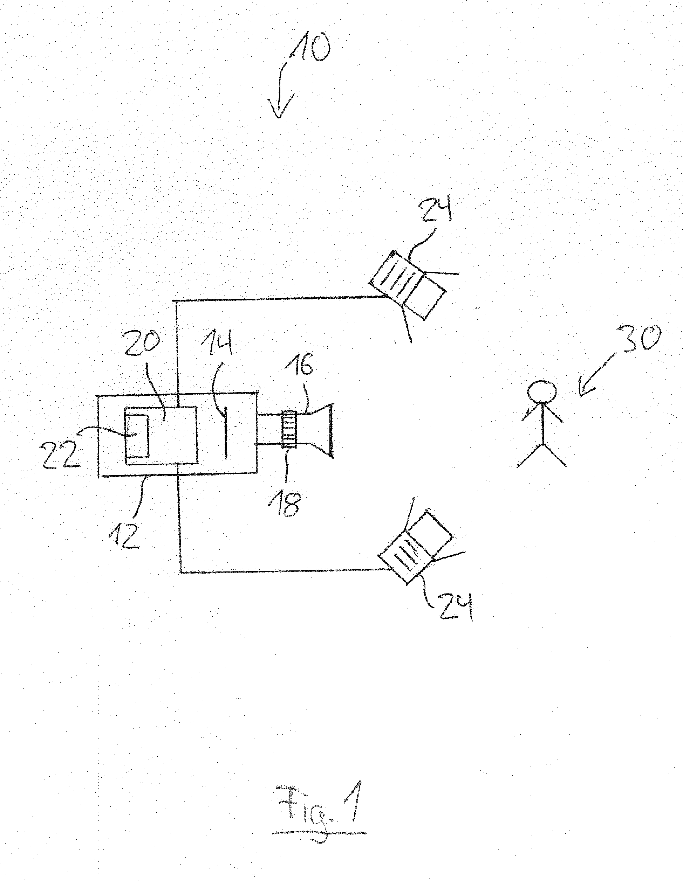

Es zeigt
- Fig. 1: eine schematische Darstellung eines Systems, welches zum Aufnehmen einer Folge von Bildern eines von einer Laufbildkamera erfassbaren Motivs eingerichtet ist.

Fig. 1 zeigt ein Filmproduktionssystem 10, welches eine Laufbildkamera 12 und zwei Beleuchtungseinrichtungen 24 umfasst. Die Laufbildkamera 12 weist einen Bildsensor 14 zum Erzeugen von elektrischen Signalen in Abhängigkeit von einer Belichtung des Bildsensors 14 auf. Ein von der Laufbildkamera 12 erfassbares Motiv 30 wird mittels der Beleuchtungseinrichtungen 24 ausgeleuchtet und mittels eines Objektivs 16 auf den Bildsensor 14 abgebildet. Das Objektiv 16 weist eine Blendenapertur-Einstellvorrichtung 18 auf, mit welcher die Apertur einer in das Objektiv 16 integrierten Blende, beispielsweise einer Irisblende, verändert werden kann. Die Blendenapertur-Einstellvorrichtung 18, welche auch im Folgenden kurz als Blendenring 18 bezeichnet wird, ist im Ausführungsbeispiel als ein manuell betätigbarer Blendenring 18 dargestellt. Gemäß Abwandlungen kann auch ein Blendenring-Stellmotor vorgesehen sein, um die Objektivblende motorisch zu verstellen, wobei die Ansteuerung des Blendenring-Stellmotors über eine entsprechende Steuereinheit oder Bedieneinheit erfolgen kann.

Die Laufbildkamera 12 weist eine zentrale Auswerte- und Steuereinrichtung auf, welche im Folgenden auch kurz als Steuereinrichtung 20 bezeichnet wird. Die Steuereinrichtung 20 ist dazu eingerichtet, die von dem Bildsensor 14 erzeugten Signale zu empfangen und zu verarbeiten. Insbesondere ist die Steuereinrichtung 20 dazu eingerichtet, für die gesamte Fläche des Bildsensors 14, Teilbereiche und/oder einzelne Pixel des Bildsensors 14 einen jeweiligen Helligkeitswert zu ermitteln.

Die Steuereinrichtung 20 ist ferner mit der Blendenapertur-Einstellvorrichtung 18 des Objektivs 16 verbunden, um von dieser einen Einstellwert für den Betriebsparameter, d.h. den eingestellten Blendenwert, zu empfangen.

Die Beleuchtungseinrichtungen 24 sind über Steuerleitungen mit der Steuereinrichtung 20 verbunden, um von der Steuereinrichtung 20 Steuerbefehle zu empfangen, welche die Beleuchtungsintensität des jeweiligen von der Beleuchtungseinrichtung 24 erzeugten Lichts steuern. Die genannten Steuerbefehle können in Form von Verstellwerten für einen Betriebsparameter der jeweiligen Beleuchtungseinrichtung 24, beispielsweise der Beleuchtungsintensität, übermittelt werden.

Nachfolgend wird ein Verfahren zum Aufnehmen einer Folge von Bildern beschrieben (auch als Laufbildfolge oder Bildsequenz bezeichnet), welches beispielsweise mit dem vorstehend erläuterten Filmproduktionssystem 10 durchgeführt werden kann.

In dieser beispielhaft erläuterten Ausführungsform des Verfahrens dienen die Blendenapertur-Einstellvorrichtung 18 als Variationsvorrichtung und die beiden Beleuchtungseinrichtungen 24 als jeweilige Kompensationsvorrichtungen.

Wie eingangs erläutert, soll zur Erzielung von gestalterischen Effekten während der Aufnahme einer Bildsequenz des Motivs 30 die Öffnung der Objektivblende mittels des Blendenrings 18 verändert werden, wodurch sich der Schärfentiefebereich während der Aufnahme der Filmsequenz verändert. Durch die Veränderung der Blendenapertur verändert sich jedoch auch die Belichtung des Bildsensors 14, also die auf den Bildsensor 14 auftreffende Lichtmenge. Um diese Belichtungsänderung zu kompensieren, sieht das hier beispielhaft erläuterte Verfahren eine Kompensation durch eine entsprechende Ansteuerung der Beleuchtungseinrichtungen 24 vor, wobei die Beleuchtungsintensität des von den Beleuchtungseinrichtungen 24 erzeugten Lichts verändert wird.

Die Durchführung des Verfahrens erfolgt hier beispielhaft innerhalb der Steuereinrichtung 20 der Laufbildkamera 12. Es versteht sich, dass gemäß einer Abwandlung auch eine externe Steuereinrichtung vorgesehen sein kann, welche zweckmäßigerweise mit der Steuereinrichtung 20 und den Beleuchtungseinrichtungen 24 kommunikativ verbunden ist.

Die Durchführung des Verfahrens umfasst zumindest einen Variationsbetrieb und einen Kalibrierbetrieb. Nachfolgend wird zunächst der Variationsbetrieb erläutert.

Im Variationsbetrieb empfängt die Steuereinrichtung 20 einen Einstellwert für den Blendenwert, d.h. einen Betriebsparameter der als Variationsvorrichtung dienenden Blendenapertur-Einstellvorrichtung 18. Die Betätigung des Blendenrings 18 kann hierbei manuell durch Drehen des Blendenrings 18 durch einen Benutzer oder automatisiert mit Hilfe eines nicht dargestellten Blendenring-Stellmotors erfolgen, wobei die Ansteuerung des Blendenring-Stellmotors wiederum manuell über eine Bedieneinheit oder auch automatisiert mit Hilfe eines Steueralgorithmus erfolgen kann, welcher in der Steuereinrichtung 20 oder auch in einer externen Bedieneinheit (nicht dargestellt) gespeichert sein kann. Der Einstellbereich, über den die Blendenapertur variiert werden soll, kann auch als "Schärfentieferampe" bezeichnet werden.

Der jeweils aktuelle Einstellwert der Blendenapertur wird an die Steuereinrichtung 20 übermittelt und von dieser ausgewertet. Wie bereits eingangs erläutert wurde, verursacht ein Ändern der Blendenapertur bei ansonsten gleichbleibenden äußeren Bedingungen, insbesondere der Helligkeit des Motivs, eine Zunahme oder Abnahme der von dem Bildsensor 14 erfassten Helligkeit. Damit die aufgenommene Bildsequenz keine Helligkeitsschwankungen aufweist, ist eine Kompensation der durch das Variieren der Blendenapertur erzeugten Helligkeitsänderung vorgesehen.

Hierzu wertet die Steuereinrichtung 20 die empfangenen Einstellwerte für die Blendenapertur aus und erzeugt Verstellwerte für die Helligkeit des von den Beleuchtungseinrichtungen 24 erzeugten Lichts. Der jeweilige aktuelle Verstellwert für die Beleuchtungseinrichtungen 24 wird in Abhängigkeit von dem zuletzt empfangenen Einstellwert der Blendenapertur-Einstellvorrichtung 18 anhand einer vorbestimmten Beziehung ermittelt, welche im Ausführungsbeispiel in einer in die Steuereinrichtung 20 integrierten Speichereinrichtung 22 gespeichert ist. Die vorbestimmte Beziehung wird im Rahmen eines nachfolgend noch näher erläuterten Kalibrierbetriebs empirisch ermittelt und ordnet verschiedenen Einstellwerten der Blendenapertur-Einstellvorrichtung 18 jeweilige Verstellwerte für die Beleuchtungseinrichtungen 24 zu, wobei die vorbestimmte Beziehung eine zumindest annähernd vollständige Kompensation einer durch das Ändern des Einstellwerts der Blendenapertur verursachten Beeinflussung der Belichtung des Bildsensors 14 mittels einer Änderung des jeweiligen Verstellwerts bewirkt. Die Beleuchtungseinrichtungen 24 empfangen den jeweils aktuellen Verstellwert von der Steuereinrichtung 20 und passen entsprechend die Intensität des erzeugten Lichts an.

Wenn beispielsweise die Blendenapertur verkleinert wird, was dem Einstellen eines höheren nominellen Blendenwerts entspricht, verringert sich die auf den Bildsensor 14 auftreffende Belichtung, so dass die Beleuchtungseinrichtungen 24 derart angesteuert werden, dass sie entsprechend der Verkleinerung der Blendenapertur die Helligkeit des erzeugten Lichts erhöhen. Entsprechend wird bei einer Vergrößerung der Blendenapertur die Helligkeit des erzeugten Lichts verringert.

Die Blendenapertur-Einstellvorrichtung 18 sowie die Beleuchtungseinrichtungen 24 stellen im vorliegenden Ausführungsbeispiel jeweilige Belichtungsänderungsvorrichtungen dar.

Das Filmproduktionssystem 10 kann noch weitere Belichtungsänderungsvorrichtungen aufweisen, beispielsweise einen elektronischen Verschluss des Bildsensors 14 oder einen zusätzlichen mechanischen Verschluss der Laufbildkamera 12, welcher beispielsweise als rotierende Sektorblende ausgebildet sein kann. Weiterhin kann eine Belichtungsänderungsvorrichtung auch durch eine Bildwiederholraten-Einstellvorrichtung gebildet sein, welche beispielsweise in die Steuereinrichtung 20 der Laufbildkamera 12 integriert sein kann. Eine weitere Belichtungsänderungsvorrichtung kann durch einen einstellbaren Neutraldichtefilter (nicht dargestellt) gebildet sein, welcher an der Lichteintrittsseite oder auch an der Lichtaustrittsseite des Objektivs 16 angeordnet sein kann. Ein derartiger Neutraldichtefilter ist dazu eingerichtet, seine Transmission in Abhängigkeit von einem Ansteuersignal ohne wesentliche Beeinflussung der durchgelassenen Lichtwellenlänge zu verändern. Ein weiteres Beispiel für eine Belichtungsänderungsvorrichtung ist eine sogenannte "Videowall" oder Videowand, welche nach Art eines übergroßen Bildschirms eine Vielzahl von hinsichtlich ihrer Leuchtkraft und ihrer Lichtfarbe regelbaren Bildpunkten aufweist, und mit deren Hilfe zum Beispiel ein Standbild oder auch eine Bildsequenz in das aufzunehmende Motiv 30 eingefügt werden kann, beispielsweise in Form eines Hintergrundbildes.

Die im vorliegenden Ausführungsbeispiel erläuterte Zuordnung der Blendenapertur-Einstellvorrichtung 18 als Variationsvorrichtung und der Beleuchtungseinrichtungen 24 als Kompensationsvorrichtungen ist nur beispielhaft zu verstehen. Gemäß verschiedenen Abwandlungen kann als Kompensationsvorrichtung auch der elektronische oder mechanische Verschluss der Laufbildkamera 12 verwendet werden, wodurch durch Änderungen der Blendenapertur verursachte Belichtungen durch ein Anpassen der Belichtungszeit kompensiert werden. Der genannte elektronische oder mechanische Verschluss kann jedoch auch selber als Variationsvorrichtung eingesetzt werden, um durch Änderung der Belichtungszeit beispielsweise stroboskopartige Bildeffekte zu erzielen.

Es versteht sich, dass noch zahlreiche weitere Kombinations- oder Zuordnungsmöglichkeiten bestehen, auf welche Weise die zur Verfügung stehenden Belichtungsänderungsvorrichtungen als Variationsvorrichtung bzw. als Kompensationsvorrichtung eingesetzt werden können.

Nachfolgend wird nun die Durchführung des Kalibrierbetriebs näher erläutert. Zunächst muss sichergestellt werden, dass die Intensität des in die Laufbildkamera 12 - genauer: die Intensität des in das Objektiv 16 eintretenden Lichts - während der Durchführung des Kalibrierbetriebs konstant gehalten wird. Es dürfen also während der Durchführung eines Kalibrierdurchgangs zum Beispiel keine zusätzlichen Beleuchtungen ein- oder ausgeschaltet werden, welche nicht in die Durchführung des erfindungsgemäßen Verfahrens einbezogen sind. Das Ermitteln der vorbestimmten Beziehung kann dadurch geschehen, dass verschiedene Einstellwerte für die Blendenapertur nacheinander eingestellt werden und simultan dazu ein jeweiliger Helligkeitswert mit Hilfe des Bildsensors 14 ermittelt wird, welcher demnach die Belichtung des Bildsensors 14 repräsentiert. Dies kann für eine Vielzahl von verschiedenen Einstellwerten in diskreten Stufen, insbesondere auch quasikontinuierlich, erfolgen. Für jeden der verschiedenen Einstellwerte wird durch Verändern des Werts des Betriebsparameters, also der Beleuchtungsintensität einer jeweiligen Beleuchtungseinrichtung 24, eine jeweilige Anpassung des Verstellwerts ermittelt, die bewirkt, dass der jeweilige Helligkeitswert des Bildsensors 14 zumindest im Wesentlichen einem Sollwert entspricht, der für die verschiedenen Einstellwerte der Blendenapertur identisch ist. Mit anderen Worten kann mittels einer Regelschleife mit dem Einstellwert der Blendenapertur als Eingangsgrö-ße und dem Verstellwert für eine jeweilige Beleuchtungseinrichtung 24 als Ausgangsgröße die von dem Bildsensor 14 erfasste Helligkeit konstant gehalten werden. Die Blendenwerte und die zugeordneten Verstellwerte können als Wertepaare gespeichert oder zunächst zwischengespeichert werden, um auf ihrer Grundlage gegebenenfalls unter Anwendung von weiteren Datenverarbeitungsschritten wie Filterungen oder Ausgleichsrechnungen eine jeweilige vorbestimmte Beziehung zu ermitteln, welche dann in der Speichereinrichtung 22 gespeichert werden kann. Die ermittelte vorbestimmte Beziehung entspricht somit der Gesamtheit der empirisch ermittelten Wertepaare (Einstellwert und jeweils angepasster Verstellwert).

Der Kalibrierbetrieb kann in einer Weise durchgeführt werden, dass für jede der Beleuchtungseinrichtungen 24 eine jeweilige vorbestimmte Beziehung separat ermittelt wird, d.h. die jeweils andere Beleuchtungseinrichtung 24 wird bezüglich ihrer Beleuchtungsintensität konstant gehalten oder auch deaktiviert. Grundsätzlich können jedoch bei der Ermittlung einer gemeinsamen vorbestimmten Beziehung auch beide Beleuchtungseinrichtungen 24 einbezogen werden, wobei die erforderliche Anpassung des Verstellwerts für die Beleuchtungseinrichtungen 24 gleichmäßig für beide Beleuchtungseinrichtungen 24 oder auch entsprechend einem vorgegebenen Verhältnis ermittelt werden kann. Im Kalibrierbetrieb können für eine oder auch mehrere Kombinationen von jeweiligen Variations- und Kompensationsvorrichtungen jeweilige vorbestimmte Beziehungen ermittelt, in der Speichereinrichtung 22 gespeichert werden und bei der Durchführung des Variationsbetriebs von der Steuereinrichtung 20 entsprechend aus der Speichereinrichtung 22 abgerufen oder ausgelesen werden.

Gemäß einer Abwandlung kann eine Speicherung der einen oder mehreren vorbestimmten Beziehungen auch zentral oder dezentral in externen Speichereinrichtungen erfolgen. Die Speicherung kann beispielsweise in einer jeweiligen, einer Belichtungsänderungsvorrichtung zugeordneten Speichereinrichtung oder in einer netzwerkbasierten Datenbank erfolgen.

Gemäß einer weiteren Abwandlung des Verfahrens können zur Ermittlung der vorbestimmten Beziehungen unter Verwendung des Bildsensors 14 jeweilige Kennlinien ermittelt werden, welche durch Variation der jeweiligen Einstellwerte der zugehörigen Belichtungsänderungsvorrichtung ermittelt werden und entsprechend auch in der Speichereinrichtung 22 gespeichert werden. Die Ermittlung von vorbestimmten Beziehungen auf der Grundlage von Kennlinien wurde vorstehend bereits erläutert. Insbesondere können (wiederum bei konstanter Intensität des in die Laufbildkamera eintretenden Lichts) die verschiedenen Einstellwerte des Betriebsparameters der Variationsvorrichtung (z.B. der Blendenapertur-Einstellvorrichtung 18) nacheinander eingestellt werden und simultan dazu anhand von Bildsignalen des Bildsensors 14 jeweilige zugehörige Helligkeitswerte ermittelt werden, welche die Belichtung des Bildsensors 14 repräsentieren, wobei auf der Grundlage der verschiedenen Einstellwerte und der zugehörigen Helligkeitswerte eine Variationskennlinie empirisch ermittelt wird. Ferner wird zumindest eine Kompensationskennlinie ermittelt, welche für eine jeweilige Kompensationsvorrichtung (z.B. Beleuchtungseinrichtung 24) einer gewünschten Änderung eines mittels des Bildsensors 14 erfassten Helligkeitswerts eine hierfür notwendige Änderung des Verstellwerts dieser Kompensationsvorrichtung zuordnet. Das Ermitteln dieser Kompensationskennlinie kann wiederum experimentell erfolgen, oder auch durch analytische Berechnung, nämlich wenn für die betreffende Kompensationsvorrichtung der Zusammenhang zwischen einer Eingangsgröße und einer Ausgangsgrö-ße vorab bekannt ist. Die genannten Kennlinien können durch diskrete Werte oder durch einen kontinuierlichen oder quasi-kontinuierlichen Verlauf definiert sein. Für einen nachfolgenden Variationsbetrieb kann der jeweilige Verstellwert des Betriebsparameters der Kompensationsvorrichtung (z.B. der Beleuchtungseinrichtung 24) somit anhand der Variationskennlinie und der zumindest einen Kompensationskennlinie ermittelt und gespeichert werden, insbesondere durch eine Linearkombination dieser Kennlinien, sodass für den Variationsbetrieb letztlich entsprechende Korrekturwerte zur Verfügung stehen.

### Bezugszeichenliste

- 10: Filmproduktionssystem
- 12: Laufbildkamera
- 14: Bildsensor
- 16: Objektiv
- 18: Blendenapertur-Einstellvorrichtung
- 20: Steuereinrichtung
- 22: Speichereinrichtung
- 24: Beleuchtungseinrichtung
- 30: Motiv

## Patentansprüche

1. Verfahren zum Aufnehmen einer Folge von Bildern mittels einer digitalen Laufbildkamera (12), die einen Bildsensor (14) zum Erzeugen von elektrischen Signalen in Abhängigkeit von einer Belichtung des Bildsensors (14) umfasst, wobei wenigstens zwei Belichtungsänderungsvorrichtungen vorgesehen sind, welche zum Beeinflussen der Belichtung des Bildsensors (14) durch ein Einstellen eines jeweiligen Betriebsparameters eingerichtet sind und aus einer Gruppe von Belichtungsänderungsvorrichtungen ausgewählt sind, die zumindest eine Bildwiederholraten-Einstellvorrichtung, eine Blendenapertur-Einstellvorrichtung (18), einen elektronischen Verschluss des Bildsensors (14), einen mechanischen Verschluss, einen einstellbaren Neutraldichtefilter und zumindest eine steuerbare Beleuchtungseinrichtung (24) zur Beleuchtung eines von der Laufbildkamera (12) erfassbaren Motivs umfasst,
wobei eine der Belichtungsänderungsvorrichtungen als eine Variationsvorrichtung vorgesehen oder auswählbar ist und zumindest eine weitere, von der Variationsvorrichtung verschiedene Belichtungsänderungsvorrichtung als zumindest eine Kompensationsvorrichtung vorgesehen oder auswählbar ist,
wobei zumindest eine Steuereinrichtung (20) vorgesehen ist, welche zum Empfangen eines Einstellwerts des Betriebsparameters der Variationsvorrichtung und zum Ausgeben eines jeweiligen Verstellwerts an die zumindest eine Kompensationsvorrichtung eingerichtet ist,
**gekennzeichnet durch** die folgenden Schritte, die in einem Variationsbetrieb während eines Aufnehmens einer Folge von Bildern durchgeführt werden:
- Beeinflussen der Belichtung des Bildsensors (14) durch ein Ändern des Einstellwerts des Betriebsparameters der Variationsvorrichtung;
- Empfangen des geänderten Einstellwerts;
- Ermitteln eines jeweiligen Verstellwerts des Betriebsparameters der zumindest einen Kompensationsvorrichtung und Ausgeben des jeweiligen Verstellwerts von der Steuereinrichtung (20) an die zumindest eine Kompensationsvorrichtung in Abhängigkeit von dem empfangenen geänderten Einstellwert des Betriebsparameters der Variationsvorrichtung, wobei der jeweilige Verstellwert derart gewählt ist, dass eine durch das Ändern des Einstellwerts verursachte Beeinflussung der Belichtung des Bildsensors (14) durch eine Änderung des jeweiligen Verstellwerts zumindest im Wesentlichen kompensiert wird; und
- Betreiben der zumindest einen Kompensationsvorrichtung gemäß dem ausgegebenen jeweiligen Verstellwert.

2. Verfahren nach Anspruch 1,
wobei als Variationsvorrichtung
ein mechanischer oder elektronischer Verschluss des Bildsensors (14), dessen Betriebsparameter eine Belichtungszeit ist, und/oder
eine Blendenapertur-Einstellvorrichtung (18), deren Betriebsparameter ein Blendenwert ist, und/oder
eine Bildwiederholraten-Einstellvorrichtung, deren Betriebsparameter eine Bildwiederholrate des Bildsensors (14) ist,
vorgesehen und/oder auswählbar ist.

3. Verfahren nach Anspruch 1 oder 2,
wobei der jeweilige Verstellwert des Betriebsparameters der zumindest einen Kompensationsvorrichtung in Abhängigkeit von dem geänderten Einstellwert des Betriebsparameters der Variationsvorrichtung anhand einer vorbestimmten Beziehung zwischen verschiedenen Einstellwerten des Betriebsparameters der Variationsvorrichtung und zugeordneten Verstellwerten ermittelt wird.

4. Verfahren nach Anspruch 3,
wobei in einem Kalibrierbetrieb, der vor dem Variationsbetrieb durchgeführt wird, die vorbestimmte Beziehung zwischen den verschiedenen Einstellwerten des Betriebsparameters der Variationsvorrichtung und den zugeordneten Verstellwerten ermittelt und in einer mit der Steuereinrichtung (20) verbundenen oder verbindbaren Speichereinrichtung gespeichert wird.

5. Verfahren nach Anspruch 4,
wobei das Ermitteln der vorbestimmten Beziehung umfasst,
dass bei konstanter Intensität von in die Laufbildkamera (12) eintretendem Licht die verschiedenen Einstellwerte des Betriebsparameters der Variationsvorrichtung nacheinander eingestellt werden und simultan dazu ein jeweiliger Helligkeitswert ermittelt wird, welcher die Belichtung des Bildsensors (14) repräsentiert, und
dass für jeden der verschiedenen Einstellwerte durch Verändern des Werts des Betriebsparameters der zumindest einen Kompensationsvorrichtung eine jeweilige Anpassung des Verstellwerts ermittelt wird, die bewirkt, dass der jeweilige Helligkeitswert zumindest im Wesentlichen einem Sollwert entspricht, der für die verschiedenen Einstellwerte des Betriebsparameters der Variationsvorrichtung identisch ist.

6. Verfahren nach Anspruch 4,
wobei das Ermitteln der vorbestimmten Beziehung umfasst,
dass bei konstanter Intensität von in die Laufbildkamera (12) eintretendem Licht die verschiedenen Einstellwerte des Betriebsparameters der Variationsvorrichtung nacheinander eingestellt werden und simultan dazu anhand von Bildsignalen des Bildsensors (14) jeweilige zugehörige Helligkeitswerte ermittelt werden, welche die Belichtung des Bildsensors (14) repräsentieren, wobei auf der Grundlage der verschiedenen Einstellwerte und der zugehörigen Helligkeitswerte eine Variationskennlinie ermittelt wird; und dass rechnerisch oder experimentell zumindest eine Kompensationskennlinie ermittelt wird, welche für eine jeweilige Kompensationsvorrichtung einer gewünschten Änderung eines mittels des Bildsensors (14) erfassten Helligkeitswerts eine hierfür notwendige Änderung des Verstellwerts dieser Kompensationsvorrichtung zuordnet,
wobei in dem Variationsbetrieb der jeweilige Verstellwert des Betriebsparameters der zumindest einen Kompensationsvorrichtung anhand der Variationskennlinie und der zumindest einen Kompensationskennlinie ermittelt wird.

7. Verfahren nach Anspruch 6,
wobei ein experimentelles Erzeugen der Kompensationskennlinie umfasst, dass bei konstanter Intensität des in die Laufbildkamera (12) eintretenden Lichts verschiedene Verstellwerte der Kompensationsvorrichtung nacheinander eingestellt werden und simultan dazu anhand von Bildsignalen des Bildsensors (14) jeweilige zugehörige Helligkeitswerte ermittelt werden, welche die Belichtung des Bildsensors (14) repräsentieren, wobei auf der Grundlage der verschiedenen Verstellwerte und der zugehörigen Helligkeitswerte die Kompensationskennlinie ermittelt wird.

8. Verfahren nach einem der Ansprüche 5 bis 7,
wobei mehrere externe Beleuchtungseinrichtungen (24) als jeweilige Kompensationsvorrichtungen vorgesehen sind, und
wobei in dem Kalibrierbetrieb das Ermitteln der vorbestimmten Beziehung zwischen den verschiedenen Einstellwerten des Betriebsparameters der Variationsvorrichtung und den zugeordneten Verstellwerten der externen Beleuchtungseinrichtungen (24) ein spezifisch für ein jeweiliges lichtempfindliches Element des Bildsensors (14) oder für eine jeweilige Gruppe von benachbarten lichtempfindlichen Elementen durchgeführtes Ermitteln von spezifischen Beziehungen umfasst, und wobei in dem nachfolgenden Variationsbetrieb das Ausgeben eines jeweiligen Verstellwerts an die mehreren Kompensationsvorrichtungen auf der Grundlage der spezifischen Beziehungen erfolgt.

9. Verfahren nach Anspruch 8,
wobei in dem Kalibrierbetrieb das Ermitteln der spezifischen Beziehungen separat für jede Beleuchtungseinrichtung (24) oder für eine jeweilige Teilmenge der mehreren Beleuchtungseinrichtungen (24) durchgeführt wird.

10. Verfahren nach einem der Ansprüche 5 bis 9,
wobei in dem Kalibrierbetrieb das Einstellen der verschiedenen Einstellwerte des Betriebsparameters der Variationsvorrichtung ein Vergrößern und ein Verringern des Einstellwerts umfasst, wobei für ein jeweiliges Vergrößern des Einstellwerts eine erste jeweilige Anpassung bzw. Variationskennlinie und für ein jeweiliges Verringern des Einstellwerts eine zweite jeweilige Anpassung bzw. Variationskennlinie ermittelt werden, und wobei die vorbestimmte Beziehung die ersten und die zweiten Anpassungen bzw. Variationskennlinien umfasst.

11. Verfahren nach einem der Ansprüche 5 bis 10,
wobei in dem Kalibrierbetrieb der jeweilige Helligkeitswert durch Erfassen der durch den Bildsensor (14) erzeugten elektrischen Signale ermittelt wird.

12. Verfahren nach Anspruch 11,
wobei für das Ermitteln des jeweiligen Helligkeitswerts nur ein wählbarer Teilbereich, insbesondere ein zentraler Bereich des Bildsensors (14), berücksichtigt wird.

13. Verfahren nach einem der Ansprüche 5 bis 12,
wobei in dem Kalibrierbetrieb ein Plausibilitätskontrollschritt durchgeführt wird, um ein fehlerhaftes Ermitteln der vorbestimmten Beziehung zu identifizieren,
wobei der Plausibilitätskontrollschritt vorzugsweise vorsieht, eine Beeinflussung der Belichtung des Bildsensors (14) zu erkennen, welche nicht durch ein Ändern des Einstellwerts des Betriebsparameters der Variationsvorrichtung und/oder des Verstellwerts des Betriebsparameters der zumindest einen Kompensationsvorrichtung verursacht ist.

14. Verfahren nach einem der vorhergehenden Ansprüche,
wobei in dem Variationsbetrieb ein Qualitätskontrollschritt durchgeführt wird, in welchem die von der Laufbildkamera (12) erfasste Folge von Bildern darauf geprüft wird, ob zumindest ein wählbarer jeweiliger Teilbereich der Bilder während des Änderns des Einstellwerts des Betriebsparameters der Variationsvorrichtung einen zumindest im Wesentlichen konstanten Helligkeitswert aufweist.
